# EUROPEAN PATENT SPECIFICATION

(11) **EP 4 316 105 B1**
(45) Date of publication and mention of the grant of the patent: **26.11.2025**
(21) Application number: 22718923.0
(22) Date of filing: 29.03.2022
(51) Int. Cl.: H04L 5/00, H04W 72/23, H04B 7/0413, H04W 74/0808

(54) **SHORT CONTROL SIGNALING FOR SSB TRANSMISSIONS**
KURZE STEUERSIGNALISIERUNG FÜR SSB-ÜBERTRAGUNGEN
SIGNALISATION DE COMMANDE COURTE POUR TRANSMISSIONS SSB

(30) Priority: 29.03.2021 FI 20215361
(43) Date of publication of application: 07.02.2024
(73) Proprietor: Nokia Technologies Oy, 02610 Espoo (FI)
(72) Inventor: LUNTTILA, Timo Erkki, 02610 Espoo (FI); HOOLI, Kari Juhani, 90620 Oulu (FI); TIIROLA, Esa Tapani, 90620 Oulu (FI); KAIKKONEN, Jorma Johannes, 90800 Oulu (FI); HAKOLA, Sami-Jukka, 90450 Kempele (FI)
(74) Representative: Laine IP Oy
(86) International application number: PCT/EP2022/058198
(87) International publication number: WO 2022/207596

(56) References cited:
- US-A1- 2020 059 927
- MODERATOR (INTEL CORPORATION): "Summary #2 of email discussion on initial access aspect of NR extension up to 71 GHz", vol. RAN WG1, no. e-Meeting; 20200125 - 20200205, 30 January 2021 (2021-01-30), XP051975984, Retrieved from the Internet <URL:https://ftp.3gpp.org/tsg_ran/WG1_RL1/TSGR1_104-e/Docs/R1-2101905.zip R1-2101905 60ghz email_discussion_01_v052.docx> [retrieved on 20210130]
- APPLE INC: "Channel access mechanisms for unlicensed access above 52.6GHz", vol. RAN WG1, no. e-Meeting; 20210125 - 20210205, 18 January 2021 (2021-01-18), XP051971544, Retrieved from the Internet <URL:https://ftp.3gpp.org/tsg_ran/WG1_RL1/TSGR1_104-e/Docs/R1-2101377.zip R1-2101377 channel access .docx> [retrieved on 20210118]
- INTEL CORPORATION: "Discussion on channel access mechanism for extending NR up to 71 GHz", vol. RAN WG1, no. e-Meeting; 20210125 - 20210205, 19 January 2021 (2021-01-19), XP051971118, Retrieved from the Internet <URL:https://ftp.3gpp.org/tsg_ran/WG1_RL1/TSGR1_104-e/Docs/R1-2100648.zip R1-2100648 Intel 60ghz channel access.docx> [retrieved on 20210119]

## Description

### Technical field

Some example embodiments may generally relate to mobile or wireless telecommunication systems, such as Long Term Evolution (LTE) or fifth generation (5G) radio access technology or new radio (NR) access technology, or other communications systems. For example, certain embodiments may relate to methods and apparatus for short control signaling (SCS) for synchronization signal block (SSB) transmissions.

### Background

Examples of mobile or wireless telecommunication systems may include the Universal Mobile Telecommunications System (UMTS) Terrestrial Radio Access Network (UTRAN), Long Term Evolution (LTE) Evolved UTRAN (E-UTRAN), LTE-Advanced (LTE-A), MulteFire, LTE-A Pro, and/or fifth generation (5G) radio access technology or new radio (NR) access technology. 5G wireless systems refer to the next generation (NG) of radio systems and network architecture. 5G is mostly built on a new radio (NR), but a 5G (or NG) network can also build on E-UTRA radio. It is estimated that NR may provide bitrates on the order of 10-20 Gbit/s or higher, and may support at least enhanced mobile broadband (eMBB) and ultra-reliable low-latency-communication (URLLC) as well as massive machine type communication (mMTC). NR is expected to deliver extreme broadband and ultra-robust, low latency connectivity and massive networking to support the Internet of Things (IoT). With IoT and machine-to-machine (M2M) communication becoming more widespread, there will be a growing need for networks that meet the needs of lower power, low data rate, and long battery life. It is noted that, in 5G, the nodes that can provide radio access functionality to a user equipment (i.e., similar to Node B in UTRAN or eNB in LTE) may be named gNB when built on NR radio and may be named NG-eNB when built on E-UTRA radio.

Document 3GPP R1-2101905, 25.1.2020 - 5.2.2020 "Summary #2 of email discussion on initial access aspect of NR extension up to 71 GHz" summarizes an email discussion concerning new radio, NR, extension aspects with contributions from several companies. For example Samsung states that there will always be a scenario where short control signal is not applicable, for example where the duty cycle is exceeded. Document 3GPP R1-2101377, 25.1.2020 - 5.2.2020 "Channel access mechanisms for unlicensed access above 52.6 GHz" suggests that for downlink, SSB should be transmitted as short control signaling and for uplink, RACH should be transmitted as short control signaling.

### Summary

A first embodiment may be directed to an apparatus comprising means for examining whether a signal to be transmitted belongs to a first group or to another group based on a transmission time instance of the signal and a type of the signal; determining an allowance of time or resources of a time period for one or more short control signals; determining whether to transmit the signal as one or more short control signals based on the group the signal belongs to and on the allowance; and transmitting the signal either as one or more short control signals without channel sensing, or as a signal subject to listen before talk procedure.

According to a second embodiment, a method may include obtaining by a user equipment information whether a signal to be received from a network element belongs to a first group or to another group based on a transmission time instance of the signal and a type of the signal; determining an allowance of time or resources of a time period for one or more short control signals; determining whether to receive the signal as one or more short control signals based on the group the signal belongs to and on the allowance; and receiving the signal either as one or more short control signals without channel sensing, or as a signal subject to listen before talk procedure.

A third embodiment may be directed to an apparatus comprising means for obtaining, by a user equipment, information whether a signal to be received from a network element belongs to a first group or to another group based on a transmission time instance of the signal and a type of the signal; determining an allowance of time or resources of a time period for one or more short control signals; determining whether to receive the signal as one or more short control signals based on the group the signal belongs to and on the allowance; and receiving the signal either as one or more short control signals without channel sensing, or as a signal subject to listen before talk procedure.

### Brief description of the drawings

For proper understanding of example embodiments, reference should be made to the accompanying drawings, wherein:
Fig. 1a illustrates an example of SSB candidate time locations in slot;
Fig. 1b illustrates an example of SSB candidate time locations in symbol level;
Figs. 2a, 2b and 2c illustrate examples of SSB and CORESET(#0) multiplexing patterns;
Fig. 3 illustrates an exemplary SCS pattern between four groups, according to an embodiment;
Fig. 4 illustrates an exemplary TDM pattern between two groups, according to an embodiment;
Fig. 5a illustrates an example block diagram of an apparatus, according to an embodiment; and
Fig. 5b illustrates an example block diagram of an apparatus, according to another embodiment;
Fig. 6 illustrates an example of controlling SCS in uplink, according to some embodiments;
Fig. 7 illustrates an example flow diagram of a method, according to some embodiments.

### Detailed description

It will be readily understood that the components of certain example embodiments, as generally described and illustrated in the figures herein, may be arranged and designed in a wide variety of different configurations. Thus, the following detailed description of some example embodiments of systems, methods, apparatuses, and computer program products for controlling SCS in uplink is not intended to limit the scope of certain embodiments but is representative of selected example embodiments.

The features, structures, or characteristics of example embodiments described throughout this specification may be combined in any suitable manner in one or more example embodiments. For example, the usage of the phrases "certain embodiments," "one embodiment," "some embodiments," or other similar language, throughout this specification refers to the fact that a particular feature, structure, or characteristic described in connection with an embodiment may be included in at least one embodiment. Thus, appearances of the phrases "in certain embodiments," "in one embodiment," "in some embodiments," "in other embodiments," or other similar language, throughout this specification do not necessarily all refer to the same group of embodiments, and the described features, structures, or characteristics may be combined in any suitable manner in one or more example embodiments. In addition, the phrase "set of" refers to a set that includes one or more of the referenced set members. As such, the phrases "set of," "one or more of," and "at least one of," or equivalent phrases, may be used interchangeably. Further, "or" is intended to mean "and/or," unless explicitly stated otherwise.

Additionally, if desired, the different functions or operations discussed below may be performed in a different order and/or concurrently with each other. Furthermore, if desired, one or more of the described functions or operations may be optional or may be combined. As such, the following description should be considered as merely illustrative of the principles and teachings of certain example embodiments, and not in limitation thereof.

Certain regulations for operation on 60 gigahertz (GHz) unlicensed spectrum may use a spectrum sharing or co-channel coexistence mechanism, but specifications may not provide for any specific type of a mechanism. In some regions, separate specifications may be defined for different use cases or deployments (e.g., for fixed outdoor equipment or point-to-point communications or for indoor-only use). Some specifications may provide for the use of listen-before-talk (LBT) as well as without LBT on 60 GHz. In LBT procedure the transmitter must before being permitted to transmit, sense the channel to be idle based on an energy detection measurement, denoted as channel sensing.

Short control signals (SCS), as defined by the European Telecommunications Standards Institute (ETSI), are control and management transmissions which are not required to undergo LBT procedure, but can instead be transmitted without channel sensing, as long as the total duration of SCS transmissions over a 100-ms observation interval does not exceed 10%, i.e. 10 ms.

NR may provide for SCS for unlicensed spectrum operation at the frequency range from 53.6 GHz to 71GHz. For example, NR may support contention-exempt SCS transmission in the 60GHz band for regions where LBT is needed and SCS without LBT is allowed. If regulations do not allow SCS exemption in a region when operating with LBT, operation with LBT for these SCSs may be supported. Restrictions to the transmission, such as on duty cycle (airtime measured over a relatively long period of time), content, transmit (TX) power, etc. may be provided for by NR.

One scenario for SCS usage may include transmission of synchronization signal block (SSB) or discovery reference signals (DRS) by the gNB. SSB is a core building block of the NR system. The SSB is used e.g. for initial cell search and selection, beam (beam management) and cell (RRM, Radio Resource Management) measurements, radio link monitoring (RLM) and new beam identification in beam recovery procedure. The block consists of Primary Synchronization Signal (PSS), Secondary Synchronization Signal (SSS) and Physical Broadcast Channel (PBCH) and Demodulation Reference Signal (DMRS) for PBCH demodulation. In a cell search procedure a user equipment (UE) acquires time and frequency synchronization to a cell, and determines the physical layer cell ID. The UE does this by searching for primary synchronization signal (PSS) and secondary synchronization signal (SSS) and decoding Physical Broadcast Channel (PBCH) carried by synchronization signal (SS)/PBCH block.

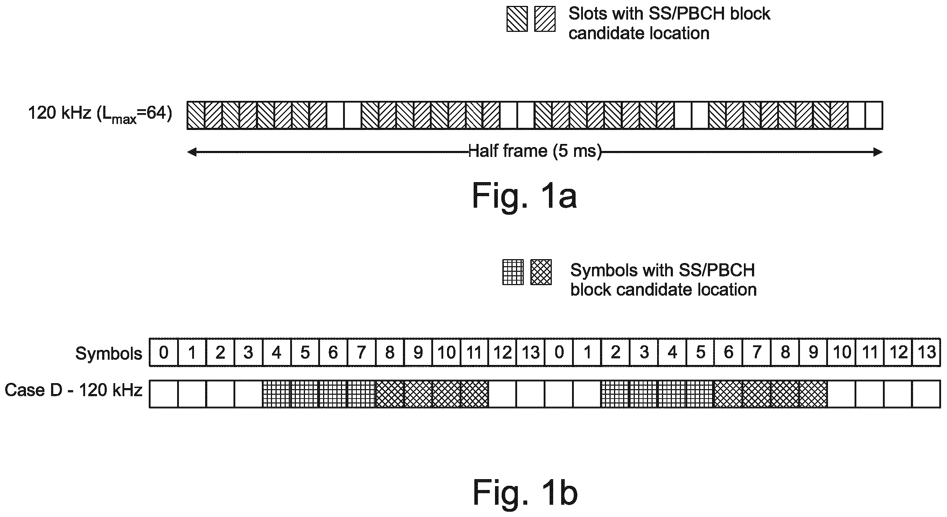

In NR and NR-U the SSB transmission is determined so that there is a set of candidate SSB time locations within a half-frame (5ms), of which all or a sub-set may be used, depending on the number of broadcast beams assumed in the deployment. The SSB blocks can be transmitted in certain time positions within a 5 ms half-frame. These locations are indexed, from 0 to Lmax-1, and the index is carried in SSB, to provide slot level timing information (also symbol and frame timing are acquired from SSB). In FR2 and also for frequency bands from 52.6 GHz to 71 GHz, it has been agreed that the number of supported SSB beams is 64. The slots in half-frame that can contain SSBs in case of 120kHz are illustrated in Fig. 1a. Correspondingly the SSB locations in a slot, at symbol level, are illustrated in Fig. 1b over two slots.

The periodicity at which SSBs are sent for a given beam can be configured among {5, 10, 20, 40, 80, 160} ms. Depending on the SSB periodicity, the amount of transmissions within each 100 ms window may vary according to Table 1 below. The table indicates the total time (ms) needed to convey 4-symbol periodical SSB for 64 beams during 100 ms windows, for sub-carrier spacings of 120 kHz and 240 kHz. It should be noted here that the window length may be a design parameter, and may vary from one scenario to another. The bold numbers indicate that 10% SCS allowance (i.e. 10 ms during a period of 100 ms) has been exceeded. The remaining portion of the 10 ms allowance is available e.g. for UL short control signaling (provided that DL signals consume the same "SCS budget"), or for other DL control information and reference signals. The numbers scale down with the number of SSB beams used.

**Table 1**

| 64 SSB beams | | 4-symbol SSB, 120 kHz subcarrier spacing | 4-symbol SSB, 240 kHz subcarrier spacing |
|---|---|---|---|
| SSB periodicity (ms) | # of SSB burst /100 ms window | max duration (ms) / 100ms window | max duration (ms) / 100ms window |
| 5 | 20 | **45,7** | **22,8** |
| 10 | 10 | **22,8** | **11,4** |
| 20 | 5 | **11,4** | 5,7 |
| 40 | 3 or 2 | 6,9 | 3,4 |
| 80 | 2 or 1 | 4,6 | 2,3 |
| 160 | 1 or 0 | 2,3 | 1,1 |

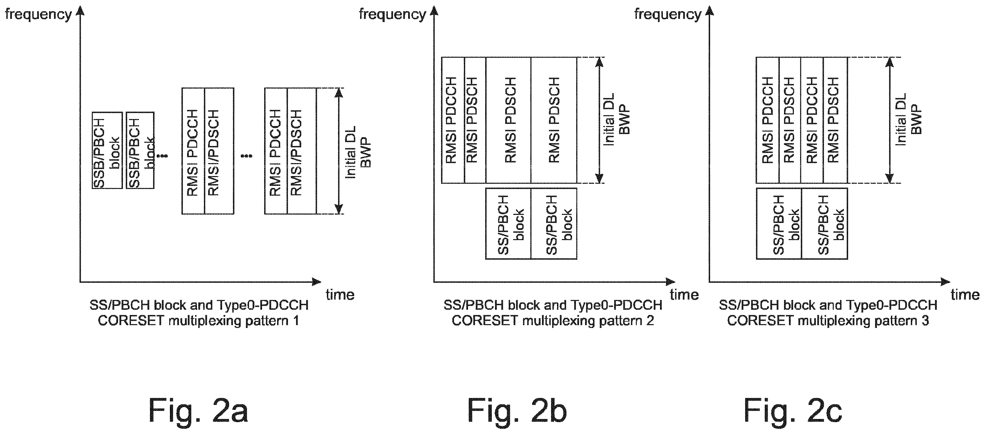

In addition to SSBs, also system information, such as SIB1/RMSI (System Information Block 1/ Remaining Minimum System Information), is broadcasted over the whole cell using the SSB beams. The time locations where a Physical Downlink Shared Channel (PDSCH) can be scheduled by a Physical Downlink Control Channel (PDCCH) is defined by Type0-PDCCH CSS (Common Search Space). The configuration of the Control Resource Set number 0 (CORESET#0) defining an initial bandwidth part (BWP) over which the SIB1 is assumed to be delivered, and the Type0-PDCCH CSS defining the PDCCH time domain candidate locations are defined by a Master Information Block (MIB). Based on the configuration provided in the MIB the UE can determine monitoring occasions for Type0-PDCCH per certain SSB index and thus SSB beam. There are three principle options for multiplexing SSB and CORESET#0, as is illustrated in Figs. 2a to 2c.

In the following, the Remaining Minimum System Information (RMSI) transmission refers to a transmission of the Type0-PDCCH that schedules PDSCH, and the scheduled PDSCH transmission that carries RMSI. Also, said PDSCH may carry other system information (OSI) and paging messages broadcasted in the cell as well. The transmission of certain SIB1/RMSI may be up-to gNB decision. In other words, gNB may be able to drop SIB1/RMSI due to negative LBT. On the other hand, usage of the SCS allowance (also) for SIB 1/RMSI may guarantee that SIB1/RMSI can be transmitted at least every now and then also in the most challenging interference scenarios.

Based on the above, the SCS allowance of 10 percent (%) over a 100 ms observation interval can be used for various types of control and management transmissions. SCS transmissions may not need to be periodic. Multiple SCS transmissions may be allowed within the 100 ms observation interval as long as the 10% limit is not exceeded. For the SCS, each device (UE and gNB) in a cell may be allowed to transmit SCS up to 10% of the time. In the case of a cellular system and several UEs attached to cell, this may result in a significant amount of SCS transmissions. Hence, 3GPP may take more conservative stand (as it took for LTE LAA and NR-Unlicensed for 5 GHz band) and allow SCS only for gNB or define that the 10% SCS allowance is shared by all the devices (gNB, UEs) in the cell.

In NR, there may be a scenario where a predefined portion of time can be used for LBT-exempt (SCS) transmissions in a cell. In some cases, the portion of time (e.g., 10% out of 100ms) is shared among multiple devices. The LBT-exempt portion of time may either be common for DL and UL transmissions on the cell (e.g., the gNB and the UEs in the cell), or used just for UL transmissions (in which case, the gNB may use separate 10% SCS allowance for DL transmissions). In this scenario, it may be unclear how to manage the DL transmission by the gNB to different UEs such that the limit for the maximum amount of SCS transmissions is not exceeded (while maximizing the usage of the SCS allowance).

Transmitting selected signals/channels as SCS transmissions is highly attractive as 1) the signals may be critical for communications, 2) deterministic transmission time of the signals may be maintained when the channel access uncertainty is removed; and 3) there may be no need to modify, e.g., signal design to facilitate the time gap for LBT measurements. For the gNB, in particular, short control signaling is an attractive option for transmitting SSBs, and possible other cell specific DL control information such as RMSI. This may allow to minimize also the related UE complexity (e.g. complexity involved in the cell search and/or DL frequency/time synchronization maintenance), and also maximize the detection performance.

From the UE point of view, it may be important to know beforehand whether a given SSB (or RMSI) will be transmitted with full certainty, or if the transmission is subject to successful LBT. If the UE knows that a given SSB/RMSI is transmitted as short control signaling without LBT:
- the uncertainty related to a measurement (due to presence or absence of SSB) may be removed, which may allow the UE to e.g. combine the transmission for more reliable reception, without having to first perform blind detection of the presence of a given signal;
- the interference conditions during an SSB may be different depending on whether LBT was done or not (without LBT, there may be strong interference from a nearby-node).

As can be seen from the Table 2 below, it is not possible to support LBT-exempt transmission of SSBs for 64 beams with a (typical) SSB periodicity of 20 ms, as using 56 beams will already consume the whole 10% SCS-allowance, wherein more beams would consume more than the 10% of SCS allowance (11,43% in this example).

**Table 2**

| # of SSBs | Duty cycle % |
|---|---|
| 48 | **8,57** |
| 56 | **10,00** |
| 64 | 11,43 |

SCS is also supported on 5 GHz and 6 GHz unlicensed spectrum as described in ETSI's harmonized standard EN 301 893, although in that case the allowance is just 5% over a period of 50 ms.

Some embodiments described herein may provide for controlling SCS in downlink by splitting the DL transmissions in question (e.g. synchronization signals (PSS/SSS), PBCH, and RMSIs for different beams) into two or more groups. For example, certain embodiments may provide for transmitting the DL transmissions belonging to the first group without LBT as short control signals. The DL transmissions belonging to the second group are, by default, transmitted only if LBT is successful prior to the transmission.

The signals belonging to the first and second group may change in time, for example, according to a predefined pattern or patterns. The pattern or patterns indicate when a signal may be transmitted as SCS (without LBT) and/or when the signal may be transmitted with LBT. The pattern definition may vary in different implementations and may also vary in different scenarios. For example, if a pattern is defined from one signal (e.g. SSB) point of view, the pattern may indicate when the signal is transmitted with SCS. As an example, a value 0 in the pattern may indicate LBT and a value 1 may indicate SCS, or vice-versa. As another example, the pattern may be common for all SSBs, indicating which group is transmitted at certain time with SCS rules such as 1, 2, 3, 4, 1, 2, 3, 4, .... Depending on the scenario, there can be more than one pattern for certain functionality or functionalities.

If there are more than two groups, only one group may be transmitted at a time as short control signals, while signals in the other groups are transmitted only if LBT is successful prior to the transmission.

Division of the signals to the two or more groups may be done according to, e.g., the following principles.

According to a first example principle, the division of DL transmissions into groups is done in a time domain, e.g., based on a transmission time instance of the signal. For example, a counting operation may be initiated from the start of the SSB or RMSI transmission cycle (80/160 ms). Some predetermined or indicated SSB occasions / RMSIs belong to the first group and may always be transmitted as short control signals, and the remaining predetermined or indicated SSB occasions / RMSIs belong to the second group and their transmissions are subject to LBT. This kind of counting may be performed for a plurality of beams such as for each of the beams of a cell, i.e. there may be a counter for each of the plurality of beams. Also the limit N at which the first group changes to the second group may be different for different beams or the same limit may be used for each beam.

In one example implementation, the N first transmissions of the transmission cycle belong to the first group and the remaining transmissions belong to the second group. The value of N may be fixed in the specifications, or be included into e.g. system information. The value of N may be different for different DL signals, e.g., for PSS/SSS, PBCH, and RMSI.

In another example implementation, the grouping of DL transmissions in time domain follows a pattern, and the beams for which SSBs/RMSI are transmitted without LBT vary deterministically, e.g. as follows:
- In a period 1 SSBs with indices 0..15 are transmitted as SCS, and SSBs with indices 16..31 are subject to LBT;
- In a period 2 SSBs with indices 0..15 are subject to LBT and SSBs with indices 16..31 are covered by SCS.

The duration of the periods above may be, for example, in the order of 100 ms, or integer multiples of that.

There may be different patterns for different DL signals. For PSS/SSS may be transmitted using a first pattern, PBCH may be transmitted using a second pattern, and RMSI may be transmitted using a third pattern. However, also other pattern combinations may be implemented, e.g. so that the first and third pattern are equal, or the second and third pattern are equal, etc.

According to a second example principle, the division of DL transmissions into groups is done in a beam domain. For example, SSBs/RMSIs associated with certain predefined or indicated beams belong to the first group and are transmitted as short control signals (e.g. beam indices 0-55), while the other beams belong to the second group and are transmitted subject to LBT (e.g. beam indices 56-N-1). In accordance with an embodiment, a unique index is provided for each of the plurality of beams, wherein a first set of indices is provided for beams associated with the first group and a second set of indices id provided for the second and possible yet another group.

The N beams in the first group, for which SSBs/RMSI is transmitted without LBT may be e.g. the beams having lowest indices (0... N-1), or some other set of beams.

In one example implementation of the second principle, gNB determines the grouping of beams e.g. based on channel occupancy ratios measured on different beams. For example, N beams with the highest / lowest channel occupancy ratio is determined to belong to the first group. The channel occupancy ratios are determined, for example, as a portion of measurements when channel is detected to be occupied among all measurements of the channel within a time period.

The value of N may be fixed in the specifications, or be included into e.g. system information. The value of N may be different for different DL signals, e.g. N=64 for PSS/SSS, N=32 for PBCH, N=0 for RMSI.

According to a third example principle, the division of DL transmissions into groups is done in terms of DL signal types. For example, PSS/SSS transmissions (or just PSS) may always belong to the first group and be transmitted without LBT, while none of or only a portion of PBCH/RMSI transmissions belong to the first group.

This alternative may be used together with the first example principle or with the second as discussed also above. For example, different DL signals associated with the same beam may belong to different groups: e.g. for a one beam, only PSS/SSS and PBCH belong to the first group, while RMSI belong to the second group. For another beam, PSS/SSS, PBCH, and RMSI all belong to the first group.

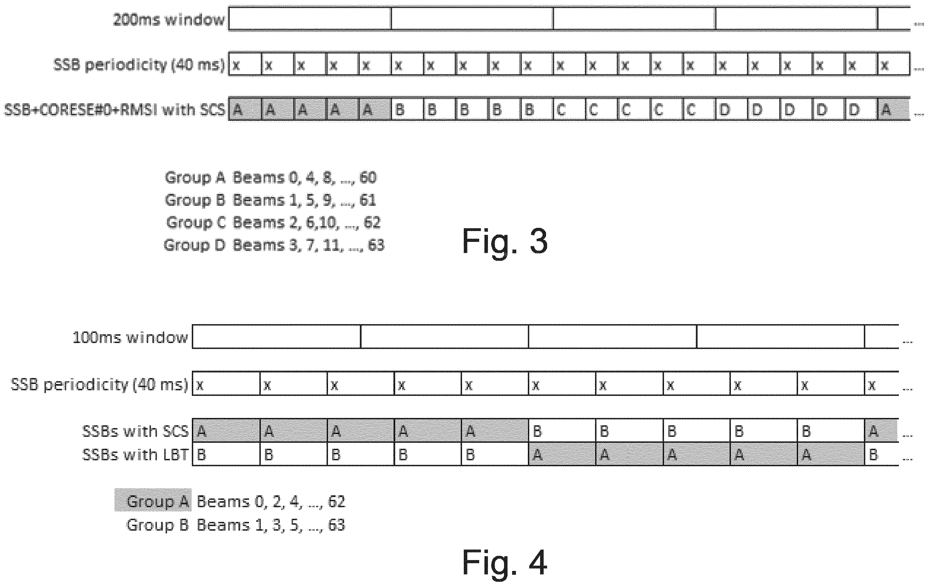

In another embodiment, the division of DL transmissions into groups is done based on both DL signal types and time. Groups may be formed in the following way, illustrated in Fig. 3. According to one example, the SSBs are always transmitted as SCS. According to another example, the SCS allowance for the associated CORESET#0+RMSI is provided only for a portion of the beams (e.g. only 16 SSBs) at a time. According to a further example, the UE is configured to monitor PDCCH (for SIB-1) from CORESET#0 only when CORESET#0+RMSI follow SCS -based transmission. gNB may also limit RMSI transmission to the time instances when RMSI follows SCS -based transmission.

Another aspect of the disclosure relates to the operation where gNB performs LBT successfully prior to a transmission of the DL transmissions in question such as synchronization signals (PSS/SSS), PBCH, and RMSIs for different beams, although such signal could have been transmitted as short control signaling. In an embodiment for such a case, the gNB postpones the use of short control signaling allowance for another DL signal that would have otherwise been transmitted subject to LBT.

The gNB may indicate to the UE with DL some control signaling, preferably e.g. GC-PDCCH, that the next few SSBs are transmitted without LBT even if they would belong to the group 2 which is defined for the LBT transmission.

The gNB may delay/postpone the applying the short control signaling for a certain time (e.g. COT, SSB periods) or number of transmissions (#SSBs) or number of timers (e.g. number of COTs) in a time window (e.g. SCS period)

From the UE point of view, the knowledge on which group the DL signals / channels belong to may impact the following procedures:
- synchronization and cell acquisition
- CSI-RS validation
- CSI and RRM measurements including L1-RSRP measurements used for beam management
- Sharing of gNB channel occupancy time, or initiation of a channel occupancy by the UE.

Fig. 4 shows an example according to the first example principle in which DL transmissions are divided into two or more groups in a time domain. In the example of Fig. 4 the following parameters are assumed. The periodicity of the synchronization signal blocks SSB is assumed to be 40 ms, i.e. 6.9% of the time with 120 kHz subcarrier spacing, when 64 beams are used, corresponding the example presented above in Table 1. It is also assumed that Group A covers SSB beams 0, 2, 4, 6, ...62 and Group B covers SSB beams 1, 3, 5, 7, ...63. One group at a time is allocated for SCS -based transmission for a period of 200 ms in this example. Another group is allocated for LBT -based transmission for the period having the same length i.e. 200 ms. The period is selected such that it matches with the SSB periodicity or a multiple of the SSB periodicity, in this example five times the SSB period. The groups are swapped after each period i.e. after every 200 ms in this example.

One benefit of this arrangement is that the SCS allowance can be distributed quite evenly between all 64 beams while maintaining reasonably high SSB periodicity. It is noted here that by this arrangement, even an SSB periodicity of 20 ms could be supported, which would otherwise exceed the 10% allowance.

In the following, some signaling options for the grouping of DL signals for SCS or LBT-based transmissions are described.

The grouping of DL signals between different groups can be defined by the specification. On top of that, at least part of the grouping (if not all) can be made configurable by the RRC. In this case the UE becomes aware of the grouping based on system information such as PBCH or RMSI or other DL signaling. An example of other DL signaling is higher layer configuration related to Carrier aggregation and/or dual connectivity. The signaling may indicate, e.g., which SSBs or RMSIs are transmitted based on SCS and/or LBT; and/or when certain SSB or RMSI is transmitted based on SCS and/or LBT; and/or which part of SSB or RMSI is transmitted based on SCS and/or LBT.

In the case of handover, this information may be transmitted via dedicated higher layer signaling.

It is noted that when camping to a cell, the UE does not yet need to know whether the detected SSB was transmitted based on SCS or LBT. It's enough for the UE to read/learn the grouping from the system information or other DL signaling received. Based on that, the UE can adjust the SSB monitoring according to a right hypothesis for the next SSBs.

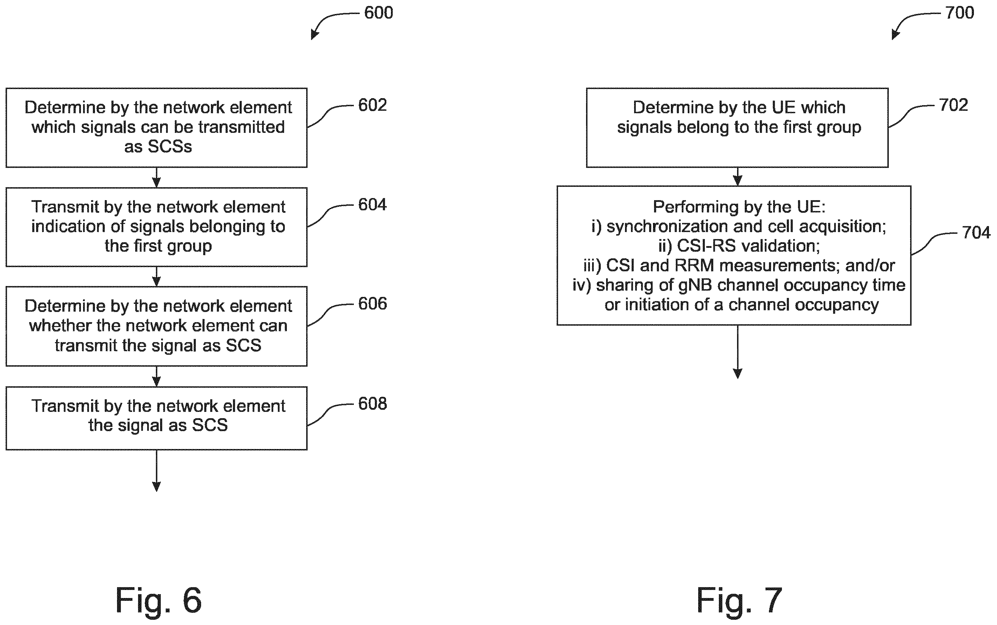

As illustrated at 602 in Fig. 6, the network node gNB may determine which signals and/or channels can be transmitted as SCSs. For example, the gNB may determine which DL signals belong to the first group and which belong to a second or yet another group.

As illustrated at 604, the network node gNB may transmit and the UE may receive, from the network node, an indication of signals belonging to the first group or the UE may obtain this information from system related parameters, for example. The gNB may also transmit an indication of signals belonging to the second and possible other groups or the UE may determine that signals not indicated to belong to the first group belong to another group. In some embodiments, the indication may include an indication of the resources, such as resources of a time period (e.g., slots or symbols), in which the gNB is allowed to transmit an SCS in a system or in at least a certain frequency range of the system or in a certain area of the system, such as cells or beam directions/areas . The indication can be transmitted to the UE(s) via GC-PDCCH or another DCI.

In some embodiments, the indication may include an indication of the portion of time that the gNB may use for its SCS transmissions during a predetermined time window (e.g., 100ms). This indication may be in the unit of symbols or group of symbols (e.g., mini-slots) or slots. Alternatively, this indication may be given as a percentage, e.g., 5% of 100ms. The indication may be carried via an RRC configuration, MAC CE, or DCI (e.g., GC-PDCCH).

As illustrated at 606, the gNB may determine whether the gNB is allowed to transmit the SCSs based on the group of the signals and may, at 608, transmit the SCSs to the UE. Additionally, or alternatively, this determination may be based on the indication of the portion of time that the gNB may use for its SCS transmissions. In this case, the gNB may initiate a counter for DL transmissions of the first group. The counter(s) may be set initially to either '0' or a number corresponding to the number of transmissions allowed. Upon an SCS DL transmission of a given type, the gNB may record the number of SCS transmissions and/or durations of the SCS transmissions that have taken place during the predetermined time window. If the number of SCS transmissions during the predetermined time window exceeds the SCS allowance (for a certain type of DL transmission) further SCS transmissions may not be allowed during the time window.

As described above, Fig. 6 is provided as an example. Other examples are possible, according to some embodiments.

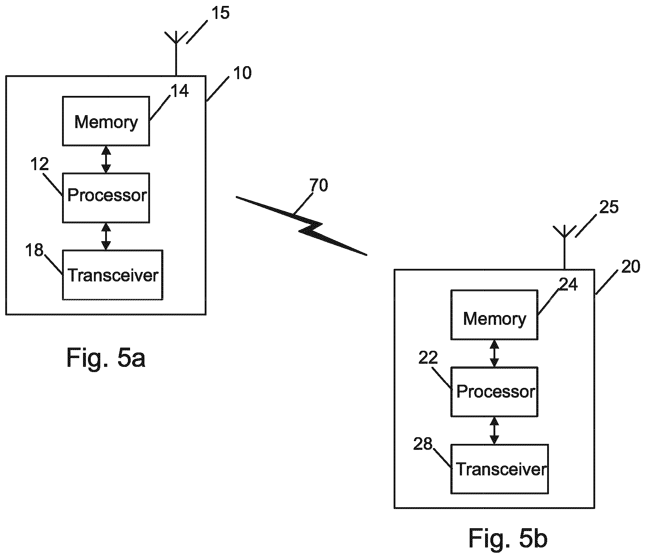

Fig. 7 illustrates an example flow diagram of a method 700, according to some embodiments. For example, Fig. 7 may illustrate example operations of a UE (e.g., apparatus 20 illustrated in, and described with respect to, Fig. 5b). Some of the operations illustrated in Fig. 7 may be similar to some operations shown in, and described with respect to, Figs. 1 and 2.

In an embodiment, the method may include, at 702, that the UE determines, which transmission instances of DL signals and channels belong to the first group or to the second group, wherein the transmission instances of DL signals and channels belonging to the first group are transmitted as short control signals without LBT, while transmission instances of the signals/channels in the second group are transmitted subject to successful LBT, unless otherwise indicated. In an embodiment, the determination may be based on predetermined division of signals/channels and transmission instances to the first group and/or the second group. This division may, for example, be defined in a standard specification such as the 3GPP specifications. This determination may use information provided e.g. by SSB or RMSI about the number of SSB beams in the cell. If the number of SSB beams is less than a predefined number the UE may determine that only SCS rule is in use while otherwise the UE determines the predetermined division is in use. Alternatively, the determination may at least partly be based on signaling by the gNB.

In an embodiment, the method may include, at 704, performing at least one of the following based on the information on whether a given transmission instance of DL signals/channels associated with a beam belongs to the first or to the second group: i) synchronization and cell acquisition; ii) CSI-RS validation; iii) CSI and RRM measurements; and/or iv) sharing of gNB channel occupancy time, or initiation of a channel occupancy by the UE.

In an embodiment, the method may further include that the UE receives a further indication for the gNB, indicating that at least some of the upcoming instances of DL signals in the second group are transmitted as short control signals. This corresponds to the second example principle presented above. In this alternative the determining, by the UE, which instances of DL signals and channels belong to the first or the second group" is based on a predefined pattern as was explained above in connection with the example implementations of the first example principle.

In the following, some further aspects are shortly described.

For the SSBs in the second group, i.e., SSBs transmitted with LBT, multiple candidate locations for transmission may be defined such that if LBT is not successful prior to the first candidate location, the gNB may attempt transmission again at the next candidate location

The above presented embodiments may provide some advantages. For example, the presented procedure may allow the network to maximize the use of short control signaling for the most critical DL transmissions, such as PSS/SSS, PBCH, and RMSI. The embodiments may also allow for fair/even distribution of certain SCS allowance (such as 10%) between different beams. The UE operation may also be simplified as the uncertainty related to presences/ absence of different DL signals may be mitigated and controlled.

As described above, Fig. 7 is provided as an example. Other examples are possible according to some embodiments.

Fig. 5a illustrates an example of an apparatus 10 according to an embodiment. In an embodiment, apparatus 10 may be a node, host, or server in a communications network or serving such a network. For example, apparatus 10 may be a network node, satellite, base station, a Node B, an evolved Node B (eNB), 5G Node B or access point, next generation Node B (NG-NB or gNB), and/or a WLAN access point, associated with a radio access network, such as a LTE network, 5G or NR. In some example embodiments, apparatus 10 may be an eNB in LTE or gNB in 5G. In some example embodiments, apparatus 10 may be a relay node, such as an integrated access and backhaul (IAB) node. In the IAB scenario, gNB operations may be performed by a distributed unit (DU), and UE operations may be performed by a mobile termination (MT) part of the IAB node.

It should be understood that, in some example embodiments, apparatus 10 may be comprised of an edge cloud server as a distributed computing system where the server and the radio node may be stand-alone apparatuses communicating with each other via a radio path or via a wired connection, or they may be located in a same entity communicating via a wired connection. For instance, in certain example embodiments where apparatus 10 represents a gNB, it may be configured in a central unit (CU) and distributed unit (DU) architecture that divides the gNB functionality. In such an architecture, the CU may be a logical node that includes gNB functions such as transfer of user data, mobility control, radio access network sharing, positioning, and/or session management, etc. The CU may control the operation of DU(s) over a front-haul interface. The DU may be a logical node that includes a subset of the gNB functions, depending on the functional split option. It should be noted that one of ordinary skill in the art would understand that apparatus 10 may include components or features not shown in Fig. 5a.

As illustrated in the example of Fig. 5a, apparatus 10 may include a processor 12 for processing information and executing instructions or operations. Processor 12 may be any type of general or specific purpose processor. In fact, processor 12 may include one or more of general-purpose computers, special purpose computers, microprocessors, digital signal processors (DSPs), field-programmable gate arrays (FPGAs), application-specific integrated circuits (ASICs), and processors based on a multi-core processor architecture, as examples. While a single processor 12 is shown in Fig. 5a, multiple processors may be utilized according to other embodiments. For example, it should be understood that, in certain embodiments, apparatus 10 may include two or more processors that may form a multiprocessor system (e.g., in this case processor 12 may represent a multiprocessor) that may support multiprocessing. In certain embodiments, the multiprocessor system may be tightly coupled or loosely coupled (e.g., to form a computer cluster).

Processor 12 may perform functions associated with the operation of apparatus 10, which may include, for example, precoding of antenna gain/phase parameters, encoding and decoding of individual bits forming a communication message, formatting of information, and overall control of the apparatus 10, including processes related to management of communication or communication resources.

Apparatus 10 may further include or be coupled to a memory 14 (internal or external), which may be coupled to processor 12, for storing information and instructions that may be executed by processor 12. Memory 14 may be one or more memories and of any type suitable to the local application environment, and may be implemented using any suitable volatile or nonvolatile data storage technology such as a semiconductor-based memory device, a magnetic memory device and system, an optical memory device and system, fixed memory, and/or removable memory. For example, memory 14 can be comprised of any combination of random access memory (RAM), read only memory (ROM), static storage such as a magnetic or optical disk, hard disk drive (HDD), or any other type of non-transitory machine or computer readable media. The instructions stored in memory 14 may include program instructions or computer program code that, when executed by processor 12, enable the apparatus 10 to perform tasks as described herein.

In an embodiment, apparatus 10 may further include or be coupled to (internal or external) a drive or port that is configured to accept and read an external computer readable storage medium, such as an optical disc, USB drive, flash drive, or any other storage medium. For example, the external computer readable storage medium may store a computer program or software for execution by processor 12 and/or apparatus 10.

In some embodiments, apparatus 10 may also include or be coupled to one or more antennas 15 for transmitting and receiving signals and/or data to and from apparatus 10. Apparatus 10 may further include or be coupled to a transceiver 18 configured to transmit and receive information. The transceiver 18 may include, for example, a plurality of radio interfaces that may be coupled to the antenna(s) 15. The radio interfaces may correspond to a plurality of radio access technologies including one or more of GSM, NB-IoT, LTE, 5G, WLAN, Bluetooth, BT-LE, NFC, radio frequency identifier (RFID), ultrawideband (UWB), MulteFire, and the like. The radio interface may include components, such as filters, converters (for example, digital-to-analog converters and the like), mappers, a Fast Fourier Transform (FFT) module, and the like, to generate symbols for a transmission via one or more downlinks and to receive symbols (for example, via an uplink).

As such, transceiver 18 may be configured to modulate information on to a carrier waveform for transmission by the antenna(s) 15 and demodulate information received via the antenna(s) 15 for further processing by other elements of apparatus 10. In other embodiments, transceiver 18 may be capable of transmitting and receiving signals or data directly. Additionally or alternatively, in some embodiments, apparatus 10 may include an input and/or output device (I/O device).

In an embodiment, memory 14 may store software modules that provide functionality when executed by processor 12. The modules may include, for example, an operating system that provides operating system functionality for apparatus 10. The memory may also store one or more functional modules, such as an application or program, to provide additional functionality for apparatus 10. The components of apparatus 10 may be implemented in hardware, or as any suitable combination of hardware and software.

According to some embodiments, processor 12 and memory 14 may be included in or may form a part of processing circuitry or control circuitry. In addition, in some embodiments, transceiver 18 may be included in or may form a part of transceiver circuitry.

As used herein, the term "circuitry" may refer to hardware-only circuitry implementations (e.g., analog and/or digital circuitry), combinations of hardware circuits and software, combinations of analog and/or digital hardware circuits with software/firmware, any portions of hardware processor(s) with software (including digital signal processors) that work together to cause an apparatus (e.g., apparatus 10) to perform various functions, and/or hardware circuit(s) and/or processor(s), or portions thereof, that use software for operation but where the software may not be present when it is not needed for operation. As a further example, as used herein, the term "circuitry" may also cover an implementation of merely a hardware circuit or processor (or multiple processors), or portion of a hardware circuit or processor, and its accompanying software and/or firmware. The term circuitry may also cover, for example, a baseband integrated circuit in a server, cellular network node or device, or other computing or network device.

As introduced above, in certain embodiments, apparatus 10 may be a network node or RAN node, such as a base station, access point, Node B, eNB, gNB, WLAN access point, or the like.

According to certain embodiments, apparatus 10 may be controlled by memory 14 and processor 12 to perform the functions associated with any of the embodiments described herein, such as some operations illustrated in, or described with respect to, Figs. 1-7. For instance, apparatus 10 may be controlled by memory 14 and processor 12 to perform the method of Fig. 7.

Fig. 5b illustrates an example of an apparatus 20 according to another embodiment. In an embodiment, apparatus 20 may be a node or element in a communications network or associated with such a network, such as a UE, mobile equipment (ME), mobile station, mobile device, stationary device, IoT device, or other device. As described herein, a UE may alternatively be referred to as, for example, a mobile station, mobile equipment, mobile unit, mobile device, user device, subscriber station, wireless terminal, tablet, smart phone, IoT device, sensor or NB-IoT device, a watch or other wearable, a head-mounted display (HMD), a vehicle, a drone, a medical device and applications thereof (e.g., remote surgery), an industrial device and applications thereof (e.g., a robot and/or other wireless devices operating in an industrial and/or an automated processing chain context), a consumer electronics device, a device operating on commercial and/or industrial wireless networks, or the like. As one example, apparatus 20 may be implemented in, for instance, a wireless handheld device, a wireless plug-in accessory, or the like.

In some example embodiments, apparatus 20 may include one or more processors, one or more computer-readable storage medium (for example, memory, storage, or the like), one or more radio access components (for example, a modem, a transceiver, or the like), and/or a user interface. In some embodiments, apparatus 20 may be configured to operate using one or more radio access technologies, such as GSM, LTE, LTE-A, NR, 5G, WLAN, WiFi, NB-IoT, Bluetooth, NFC, MulteFire, and/or any other radio access technologies. It should be noted that one of ordinary skill in the art would understand that apparatus 20 may include components or features not shown in Fig. 5b.

As illustrated in the example of Fig. 5b, apparatus 20 may include or be coupled to a processor 22 for processing information and executing instructions or operations. Processor 22 may be any type of general or specific purpose processor. In fact, processor 22 may include one or more of general-purpose computers, special purpose computers, microprocessors, digital signal processors (DSPs), field-programmable gate arrays (FPGAs), application-specific integrated circuits (ASICs), and processors based on a multi-core processor architecture, as examples. While a single processor 22 is shown in Fig. 5b, multiple processors may be utilized according to other embodiments. For example, it should be understood that, in certain embodiments, apparatus 20 may include two or more processors that may form a multiprocessor system (e.g., in this case processor 22 may represent a multiprocessor) that may support multiprocessing. In certain embodiments, the multiprocessor system may be tightly coupled or loosely coupled (e.g., to form a computer cluster).

Processor 22 may perform functions associated with the operation of apparatus 20 including, as some examples, precoding of antenna gain/phase parameters, encoding and decoding of individual bits forming a communication message, formatting of information, and overall control of the apparatus 20, including processes related to management of communication resources.

Apparatus 20 may further include or be coupled to a memory 24 (internal or external), which may be coupled to processor 22, for storing information and instructions that may be executed by processor 22. Memory 24 may be one or more memories and of any type suitable to the local application environment, and may be implemented using any suitable volatile or nonvolatile data storage technology such as a semiconductor-based memory device, a magnetic memory device and system, an optical memory device and system, fixed memory, and/or removable memory. For example, memory 24 can be comprised of any combination of random access memory (RAM), read only memory (ROM), static storage such as a magnetic or optical disk, hard disk drive (HDD), or any other type of non-transitory machine or computer readable media. The instructions stored in memory 24 may include program instructions or computer program code that, when executed by processor 22, enable the apparatus 20 to perform tasks as described herein.

In an embodiment, apparatus 20 may further include or be coupled to (internal or external) a drive or port that is configured to accept and read an external computer readable storage medium, such as an optical disc, USB drive, flash drive, or any other storage medium. For example, the external computer readable storage medium may store a computer program or software for execution by processor 22 and/or apparatus 20.

In some embodiments, apparatus 20 may also include or be coupled to one or more antennas 25 for receiving a downlink signal and for transmitting via an uplink from apparatus 20. Apparatus 20 may further include a transceiver 28 configured to transmit and receive information. The transceiver 28 may also include a radio interface (e.g., a modem) coupled to the antenna 25. The radio interface may correspond to a plurality of radio access technologies including one or more of GSM, LTE, LTE-A, 5G, NR, WLAN, NB-IoT, Bluetooth, BT-LE, NFC, RFID, UWB, and the like. The radio interface may include other components, such as filters, converters (for example, digital-to-analog converters and the like), symbol demappers, signal shaping components, an Inverse Fast Fourier Transform (IFFT) module, and the like, to process symbols, such as OFDMA symbols, carried by a downlink or an uplink.

For instance, transceiver 28 may be configured to modulate information on to a carrier waveform for transmission by the antenna(s) 25 and demodulate information received via the antenna(s) 25 for further processing by other elements of apparatus 20. In other embodiments, transceiver 28 may be capable of transmitting and receiving signals or data directly. Additionally or alternatively, in some embodiments, apparatus 20 may include an input and/or output device (I/O device). In certain embodiments, apparatus 20 may further include a user interface, such as a graphical user interface or touchscreen.

In an embodiment, memory 24 stores software modules that provide functionality when executed by processor 22. The modules may include, for example, an operating system that provides operating system functionality for apparatus 20. The memory may also store one or more functional modules, such as an application or program, to provide additional functionality for apparatus 20. The components of apparatus 20 may be implemented in hardware, or as any suitable combination of hardware and software. According to an example embodiment, apparatus 20 may optionally be configured to communicate with apparatus 10 via a wireless or wired communications link 70 according to any radio access technology, such as NR.

According to some embodiments, processor 22 and memory 24 may be included in or may form a part of processing circuitry or control circuitry. In addition, in some embodiments, transceiver 28 may be included in or may form a part of transceiving circuitry. As discussed above, according to some embodiments, apparatus 20 may be a UE, mobile device, mobile station, ME, IoT device and/or NB-IoT device, for example. According to certain embodiments, apparatus 20 may be controlled by memory 24 and processor 22 to perform the functions associated with any of the embodiments described herein, such as some operations illustrated in, or described with respect to, Figs. 1-7. For instance, in one embodiment, apparatus 20 may be controlled by memory 24 and processor 22 to perform the method of Fig. 7.

In some embodiments, an apparatus (e.g., apparatus 10 and/or apparatus 20) may include means for performing a method or any of the variants discussed herein, e.g., a method described with reference to Figs. 6 or 7. Examples of the means may include one or more processors, memory, and/or computer program code for causing the performance of the operation.

Therefore, certain example embodiments provide several technological improvements, enhancements, and/or advantages over existing technological processes. For example, one benefit of some example embodiments is control of which UL transmissions are transmitted as SCSs when an SCS allowance is shared between multiple devices, which may help to ensure that the aggregated amount of SCS transmissions with a cell remains within acceptable limits from the perspective of coexistence with other systems. Accordingly, the use of some example embodiments results in improved functioning of communications networks and their nodes and, therefore constitute an improvement at least to the technological field of UL SCS transmissions, among others.

In some example embodiments, the functionality of any of the methods, processes, signaling diagrams, algorithms or flow charts described herein may be implemented by software and/or computer program code or portions of code stored in memory or other computer readable or tangible media, and executed by a processor.

In some example embodiments, an apparatus may be included or be associated with at least one software application, module, unit or entity configured as arithmetic operation(s), or as a program or portions of it (including an added or updated software routine), executed by at least one operation processor. Programs, also called program products or computer programs, including software routines, applets and macros, may be stored in any apparatus-readable data storage medium and may include program instructions to perform particular tasks.

A computer program product may include one or more computer-executable components which, when the program is run, are configured to carry out some example embodiments. The one or more computer-executable components may be at least one software code or portions of code. Modifications and configurations used for implementing functionality of an example embodiment may be performed as routine(s), which may be implemented as added or updated software routine(s). In one example, software routine(s) may be downloaded into the apparatus.

As an example, software or a computer program code or portions of code may be in a source code form, object code form, or in some intermediate form, and it may be stored in some sort of carrier, distribution medium, or computer readable medium, which may be any entity or device capable of carrying the program. Such carriers may include a record medium, computer memory, read-only memory, photoelectrical and/or electrical carrier signal, telecommunications signal, and/or software distribution package, for example. Depending on the processing power needed, the computer program may be executed in a single electronic digital computer or it may be distributed amongst a number of computers. The computer readable medium or computer readable storage medium may be a non-transitory medium.

In other example embodiments, the functionality may be performed by hardware or circuitry included in an apparatus (e.g., apparatus 10 or apparatus 20), for example through the use of an application specific integrated circuit (ASIC), a programmable gate array (PGA), a field programmable gate array (FPGA), or any other combination of hardware and software. In yet another example embodiment, the functionality may be implemented as a signal, such as a non-tangible means that can be carried by an electromagnetic signal downloaded from the Internet or other network.

According to an example embodiment, an apparatus, such as a node, device, or a corresponding component, may be configured as circuitry, a computer or a microprocessor, such as single-chip computer element, or as a chipset, which may include at least a memory for providing storage capacity used for arithmetic operation(s) and/or an operation processor for executing the arithmetic operation(s).

Example embodiments described herein apply equally to both singular and plural implementations, regardless of whether singular or plural language is used in connection with describing certain embodiments. For example, an embodiment that describes operations of a single network node equally applies to embodiments that include multiple instances of the network node, and vice versa.

One having ordinary skill in the art will readily understand that the example embodiments as discussed above may be practiced with operations in a different order, and/or with hardware elements in configurations which are different than those which are disclosed. Therefore, although some embodiments have been described based upon these example embodiments, it would be apparent to those of skill in the art that certain modifications, variations, and alternative constructions would be apparent, while remaining within the spirit and scope of example embodiments.

Some examples are provided in the following.

A network element defines a first group and one or more other groups for signals for transmission. The division of signals to the first group and to one or more other groups may be determined in a time domain, in a beam domain or based on a signal type. The network element examines whether a signal to be transmitted to a user equipment belongs to the first group or to another group among the one or more other groups and determines an allowance of time or resources of a time period for one or more short control signals. The network element further determines whether to transmit the signal as one or more short control signals based on the group the signal belongs and on the allowance; and transmits the signal either as one or more short control signals without channel sensing, if the determination indicates that the signal belongs to the first group and short control signal transmission is allowed, or as a signal subject to listen before talk procedure.

The apparatus may indicate the group to which the signal belongs by a radio resource control transmission to a user equipment.

The signaling may indicate, which synchronization signal blocks or remaining minimum system information are transmitted based on one or more short control signals and/or which synchronization signal blocks or remaining minimum system information are transmitted based on performing a channel sensing procedure; and/or when a certain synchronization signal block or remaining minimum system information is transmitted based on one or more short control signals and/or when a certain synchronization signal block or remaining minimum system information is transmitted based on performing a channel sensing procedure; and/or which part of a synchronization signal block or remaining minimum system information is transmitted based on one or more short control signals and/or which part of the synchronization signal block or remaining minimum system information is transmitted based on performing a channel sensing procedure.

The network element may transmit this information via a dedicated higher layer signaling in the case of handover.

The network element may change the grouping of the signals periodically. The time period may be, for example, 50 ms, 100 ms or an integer multiple of 100 ms.

The network element may change the grouping according to one or more predefined patterns.

A user equipment may detect a start of a transmission cycle of a synchronization signal block or a remaining minimum system information; determine which synchronization signal blocks or remaining minimum system information belong to the first group; receive the synchronization signal blocks and/or remaining minimum system information of the first group as short control signal transmissions without channel sensing; and receive other synchronization signal blocks and/or remaining minimum system information of the transmission cycle using other than the short control signal transmission procedure, e.g. as a signal subject to listen before talk procedure.

The user equipment may count from the start of a transmission cycle transmitted synchronization signal blocks and/or remaining minimum system information; receive the synchronization signal blocks and/or remaining minimum system information of the first group as short control signal transmissions until the amount of counted transmissions equals a predetermined amount of transmissions.

The user equipment may use a pattern to determine which synchronization signal blocks or remaining minimum system information belong to the first group.

The user equipment may change the pattern periodically.

The user equipment may receive transmissions from a plurality of beams, wherein at least one beam of the plurality of beams is used for the first group for reception of short control signal transmissions and the remaining beams of the plurality of beams are used for the another group for reception of other than the short control signal transmission procedure, such as a channel sensing procedure.

The user equipment may have been provided an index for each of the plurality of beams, wherein a first set of indices is provided for beams associated with the first group and a second set of indices id provided for the another group. The first set of indices may be fixed or included in a system information or is different for different downlink signals.
The user equipment determines grouping of beams based on downlink signal types.

### PARTIAL GLOSSARY

- A/N: Acknowledgement/Negative acknowledgement
- BW: Bandwidth
- BWP: Bandwidth Part
- CORESET: Control Resource Set
- COT: Channel Occupancy Time
- CSI: Channel State Information
- CSS: Common Search Space
- CSI-RS: Channel state information - reference symbols
- CU: Central Unit
- DCI: Downlink Control Information
- DL: Downlink
- DRS: Discovery Reference Signal
- DU: Distributed Unit
- ETSI: European Telecommunications Standards Institute
- FR2: Frequency Range 2
- gNB: New Radio Node B
- GC: Group common
- HARQ-ACK: Hybrid Automatic Repeat Request Acknowledgement
- L1: Layer 1
- LAA: License Assisted Access
- LBT: Listen-Before-Talk
- LRR: Link Recovery Request
- LTE: Long Term Evolution
- MAC-CE: Medium access control - control element
- MIB: Master Information Block
- NR: New Radio
- NR-U: New Radio Unlicensed
- PBCH: Physical Broadcast Channel
- PDCCH: Physical Downlink Control Channel
- PDSCH: Physical Downlink Shared Channel
- PSS: Primary Synchronization Signal
- PUCCH: Physical Uplink Control Channel
- PUSCH: Physical Uplink Shared Channel
- RACH: Random Access Channel
- RMSI: Remaining Minimum System Information
- RSRP: Reference Signal Received Power
- RRC: Radio Resource Control
- Rx: Receive
- SCS: Short Control Signaling
- SFI: Slot Format Indicator
- SR: Scheduling Request
- SRS: Sounding Reference Signal
- SSB: Synchronization Signal Block
- SSS: Secondary Synchronization Signal
- Tx: Transmit
- UE: User Equipment
- UL: Uplink

## Claims

1. An apparatus (10) for use at a network element, the apparatus comprising:
means for examining (12) whether a signal to be transmitted by the apparatus (10), to a user equipment, UE, belongs to a first group or to another group based on a transmission time instance of the signal and a type of the signal;
means for determining (12) an allowance of time or an allowance of resources of a time period for one or more short control signals;
means for determining (12) whether to transmit the signal as one or more short control signals based on the group the signal belongs to and on the allowance; and
means for transmitting (18), to the UE, the signal either as one or more short control signals without channel sensing, or as a signal subject to listen before talk procedure.

2. The apparatus (10) according claim 1, further comprising:
means for detecting (12) a start of a transmission cycle of a synchronization signal block or a remaining minimum system information;
means for determining (12) which synchronization signal blocks or remaining minimum system information belong to the first group;
means for transmitting (18) the synchronization signal blocks and/or remaining minimum system information of the first group as short control signal transmissions; and
means for transmitting (18) other synchronization signal blocks and/or remaining minimum system information of the transmission cycle using other than the short control signal transmission procedure.

3. The apparatus (10) according to claim 2, further comprising:
means for counting (12) from the start of a transmission cycle transmitted synchronization signal blocks and/or remaining minimum system information;
means for transmitting (18) the synchronization signal blocks and/or remaining minimum system information of the first group as short control signal transmissions until amount of counted transmissions equals a predetermined amount of transmissions.

4. The apparatus (10) according to claim 2, further comprising:
means for using (12)a pattern to determine which synchronization signal blocks or remaining minimum system information belong to the first group; and
means for changing (12) the pattern periodically.

5. The apparatus (10) according to claim 1, further comprising:
means for using (12) a plurality of beams for transmissions;
means for associating (12) at least one beam of the plurality of beams with the first group for short control signal transmissions; and
means for associating (12) the remaining beams of the plurality of beams with the another group for other than the short control signal transmission procedure.

6. The apparatus (10) according to claim 5, further comprising:
means for providing (12, 18) an index for each of the plurality of beams, wherein a first set of indices is provided for beams associated with the first group and a second set of indices is provided for the another group.

7. The apparatus (10) according to claim 6, wherein the first set of indices is fixed or included in a system information or is different for different types of downlink signals.

8. The apparatus (10) according to any one of claims 5-7, further comprising:
means for determining (12) grouping of beams based on channel occupancy ratios measured on different beams.

9. The apparatus (10) according to any one of claims 1-3, further comprising:
means for determining (12) grouping of beams based on downlink signal types.

10. A method performed by a user equipment, UE, the method comprising:
obtaining by the UE, information whether a signal to be received from a network element belongs to a first group or to another group based on a transmission time instance of the signal and a type of the signal;
determining an allowance of time or an allowance of resources of a time period for one or more short control signals;
determining whether to receive the signal as one or more short control signals based on the group the signal belongs to and on the allowance; and
receiving, from the network element, the signal either as one or more short control signals without channel sensing, or as a signal subject to listen before talk procedure.

11. An apparatus (20) for use at a user equipment, UE, the apparatus comprising:
means for obtaining (22) by the UE, information whether a signal to be received from a network element belongs to a first group or to another group based on a transmission time instance of the signal and a type of the signal;
means for determining (22) an allowance of time or an allowance of resources of a time period for one or more short control signals;
means for determining (22) whether to receive the signal as one or more short control signals based on the group the signal belongs to and on the allowance; and
means for receiving (28), from the network element, the signal either as one or more short control signals without channel sensing, or as a signal subject to listen before talk procedure,

12. The apparatus (20) according to claim 11, further comprising:
means for receiving (28) a further indication indicating that at least some of upcoming instances of downlink signals in the another group are transmitted as short control signals.

13. The apparatus (20) according to claim 11 or 12, further comprising:
means for performing (22) at least one of the following based on the information on whether a given transmission instance of downlink signals or channels associated with a beam belongs to the first group or to the second group:
synchronization and cell acquisition;
channel state information - reference symbols validation;
channel state information and radio resource management measurements;
sharing of base station channel occupancy time, or initiation of a channel occupancy by the apparatus.

14. The apparatus (20) according to any one of claims 11-13, further comprising:
means for determining (22), which instances of downlink signals and channels belong to the first or the another group based on one or more patterns.

15. The apparatus (20) according claim 14, further comprising:
means for determining (22) that at least one of the one or more patterns changes in time.

## Patentansprüche

1. Einrichtung (10) zur Verwendung an einem Netzwerkelement, wobei die Einrichtung Folgendes umfasst:
Mittel zum Überprüfen (12) auf Basis einer Übertragungszeitinstanz eines Signals und einer Art des Signals, ob das Signal, das von der Einrichtung (10) zu einer Teilnehmereinrichtung, UE, zu übertragen ist, zu einer ersten Gruppe oder zu einer anderen Gruppe gehört;
Mittel zum Bestimmen (12) einer Bewilligung von Zeit oder einer Bewilligung von Ressourcen einer Zeitperiode für ein oder mehrere kurze Steuersignale;
Mittel zum Bestimmen (12) auf Basis der Gruppe, zu der das Signal gehört, und der Bewilligung, ob das Signal als ein oder mehrere kurze Steuersignale zu übertragen ist; und
Mittel zum Übertragen (18) des Signals entweder als ein oder mehrere kurze Steuersignale ohne Kanalabtastung oder als ein Signal vorbehaltlich einer Listen-before-Talk-Prozedur zur UE.

2. Einrichtung (10) nach Anspruch 1, die ferner Folgendes umfasst:
Mittel zum Detektieren (12) eines Starts eines Übertragungszyklus eines Synchronisationssignalblocks oder von verbleibenden minimalen Systeminformationen;
Mittel zum Bestimmen (12), welche Synchronisationssignalblöcke oder verbleibenden minimalen Systeminformationen zur ersten Gruppe gehören;
Mittel zum Übertragen (18) der Synchronisationssignalblöcke und/oder der verbleibenden minimalen Systeminformationen der ersten Gruppe als kurze Steuersignalübertragungen; und
Mittel zum Übertragen (18) von anderen Synchronisationssignalblöcken und/oder verbleibenden minimalen Systeminformationen des Übertragungszyklus unter Verwendung einer anderen als der kurzen Steuersignalübertragungsprozedur.

3. Einrichtung (10) nach Anspruch 2, die ferner Folgendes umfasst:
Mittel zum Zählen (12) von übertragenen Synchronisationssignalblöcken und/oder verbleibenden minimalen Systeminformationen ab dem Start eines Übertragungszyklus;
Mittel zum Übertragen (18) der Synchronisationssignalblöcke und/oder der verbleibenden minimalen Systeminformationen der ersten Gruppe als kurze Steuersignalübertragungen, bis eine Menge von gezählten Übertragungen gleich einer vorbestimmten Menge von Übertragungen ist.

4. Einrichtung (10) nach Anspruch 2, die ferner Folgendes umfasst:
Mittel zum Verwenden (12) eines Musters, um zu bestimmen, welche Synchronisationssignalblöcke oder verbleibenden minimalen Systeminformationen zur ersten Gruppe gehören; und
Mittel zum periodischen Ändern (12) des Musters.

5. Einrichtung (10) nach Anspruch 1, die ferner Folgendes umfasst:
Mittel zum Verwenden (12) einer Vielzahl von Strahlen für Übertragungen;
Mittel zum Verknüpfen (12) von mindestens einem Strahl der Vielzahl von Strahlen mit der ersten Gruppe für kurze Steuersignalübertragungen; und
Mittel zum Verknüpfen (12) der verbleibenden Strahlen der Vielzahl von Strahlen mit der anderen Gruppe für eine andere als die kurze Steuersignalübertragungsprozedur.

6. Einrichtung (10) nach Anspruch 5, die ferner Folgendes umfasst:
Mittel zum Bereitstellen (12, 18) eines Index für jeden der Vielzahl von Strahlen, wobei ein erster Satz von Indices für Strahlen bereitgestellt wird, die mit der ersten Gruppe verknüpft sind, und ein zweiter Satz von Indices für die andere Gruppe bereitgestellt wird.

7. Einrichtung (10) nach Anspruch 6, wobei der erste Satz von Indices fest oder in Systeminformationen beinhaltet ist oder für verschiedene Arten von Downlinksignalen verschieden ist.

8. Einrichtung (10) nach einem der Ansprüche 5 bis 7, die ferner Folgendes umfasst:
Mittel zum Bestimmen (12) einer Gruppierung von Strahlen auf Basis von Kanalbelegungsverhältnissen, die an verschiedenen Strahlen gemessen werden.

9. Einrichtung (10) nach einem der Ansprüche 1 bis 3, die ferner Folgendes umfasst:
Mittel zum Bestimmen (12) einer Gruppierung von Strahlen auf Basis von Downlinksignalarten.

10. Verfahren, das von einer Teilnehmereinrichtung, UE, durchgeführt wird, wobei das Verfahren Folgendes umfasst:
Erhalten von Informationen dazu, ob ein Signal, das von einem Netzwerkelement zu empfangen ist, zu einer ersten Gruppe oder zu einer anderen Gruppe gehört, durch die UE auf Basis einer Übertragungszeitinstanz des Signals und einer Art des Signals;
Bestimmen einer Bewilligung von Zeit oder einer Bewilligung von Ressourcen einer Zeitperiode für ein oder mehrere kurze Steuersignale;
Bestimmen auf Basis der Gruppe, zu der das Signal gehört, und der Bewilligung, ob das Signal als ein oder mehrere kurze Steuersignale zu empfangen ist; und
Empfangen des Signals entweder als ein oder mehrere kurze Steuersignale ohne Kanalabtastung oder als ein Signal vorbehaltlich einer Listen-before-Talk-Prozedur vom Netzwerkelement.

11. Einrichtung (20) zur Verwendung an einer Teilnehmereinrichtung, UE, wobei die Einrichtung Folgendes umfasst:
Mittel zum Erhalten (22) von Informationen dazu, ob ein Signal, das von einem Netzwerkelement zu empfangen ist, zu einer ersten Gruppe oder zu einer anderen Gruppe gehört, durch die UE auf Basis einer Übertragungszeitinstanz des Signals und einer Art des Signals;
Mittel zum Bestimmen (22) einer Bewilligung von Zeit oder einer Bewilligung von Ressourcen einer Zeitperiode für ein oder mehrere kurze Steuersignale;
Mittel zum Bestimmen (22) auf Basis der Gruppe, zu der das Signal gehört, und der Bewilligung, ob das Signal als ein oder mehrere kurze Steuersignale zu empfangen ist; und
Mittel zum Empfangen (28) des Signals entweder als ein oder mehrere kurze Steuersignale ohne Kanalabtastung oder als ein Signal vorbehaltlich einer Listen-before-Talk-Prozedur vom Netzwerkelement,

12. Einrichtung (20) nach Anspruch 11, die ferner Folgendes umfasst:
Mittel zum Empfangen (28) einer weiteren Anzeige, die anzeigt, dass mindestens einige von bevorstehenden Instanzen von Downlinksignalen in der anderen Gruppe als kurze Steuersignale übertragen werden.

13. Einrichtung (20) nach Anspruch 11 oder 12, die ferner Folgendes umfasst:
Mittel zum Durchführen (22) von mindestens einigem von Folgendem auf Basis der Informationen dazu, ob eine gegebene Übertragungsinstanz von Downlinksignalen oder Kanälen, die mit einem Strahl verknüpft sind, zur ersten Gruppe oder zur zweiten Gruppe gehört:
Synchronisation und Zellerfassung;
Kanalzustandsinformationen - Referenzsymbolvalidierung;
Kanalzustandsinformationen und Funkressourcenverwaltungsmessungen;
gemeinsames Verwenden einer Basisstationskanalbelegungszeit oder Initiierung einer Kanalbelegung durch die Einrichtung.

14. Einrichtung (20) nach einem der Ansprüche 11 bis 13, die ferner Folgendes umfasst:
Mittel zum Bestimmen (22) auf Basis von einem oder mehreren Mustern, welche Instanzen von Downlinksignalen und Kanälen zur ersten oder zur anderen Gruppe gehören.

15. Einrichtung (20) nach Anspruch 14, die ferner Folgendes umfasst:
Mittel zum Bestimmen (22), dass sich mindestens eines des einen oder der mehreren Muster über die Zeit ändert.

## Revendications

1. Appareil (10) destiné à être utilisé sur un élément de réseau, l'appareil comprenant :
des moyens pour examiner (12) si un signal à transmettre par l'appareil (10) à un équipement utilisateur, UE, appartient à un premier groupe ou à un autre groupe sur la base d'une instance de temps de transmission du signal et d'un type du signal ;
des moyens pour déterminer (12) une allocation de temps ou une allocation de ressources d'une période de temps pour un ou plusieurs signaux de commande courts ;
des moyens pour déterminer (12) s'il faut transmettre le signal sous la forme d'un ou plusieurs signaux de commande courts sur la base du groupe auquel le signal appartient et de l'allocation ; et
des moyens pour transmettre (18) le signal à l'UE, soit sous la forme d'un ou plusieurs signaux de commande courts sans détection de canal, soit sous la forme d'un signal soumis à une procédure d'écoute avant de parler.

2. Appareil (10) selon la revendication 1, comprenant en outre :
des moyens pour détecter (12) un début d'un cycle de transmission d'un bloc de signaux de synchronisation ou d'informations système minimales restantes ;
des moyens pour déterminer (12) quels blocs de signaux de synchronisation ou quelles informations système minimales restantes appartiennent au premier groupe ;
des moyens pour transmettre (18) les blocs de signaux de synchronisation et/ou les informations système minimales restantes du premier groupe sous la forme de transmissions de signal de commande court ; et
des moyens pour transmettre (18) les autres blocs de signaux de synchronisation et/ou informations système minimales restantes du cycle de transmission autrement que par la procédure de transmission de signal de commande court.

3. Appareil (10) selon la revendication 2, comprenant en outre :
des moyens pour compter (12) à partir du début d'un cycle de transmission les blocs de signaux de synchronisation et/ou les informations système minimales restantes transmis ;
des moyens pour transmettre (18) les blocs de signaux de synchronisation et/ou les informations système minimales restantes du premier groupe sous la forme de transmissions de signal de commande court jusqu'à ce que la quantité de transmissions comptées soit égale à une quantité prédéterminée de transmissions.

4. Appareil (10) selon la revendication 2, comprenant en outre :
des moyens pour utiliser (12) un motif afin de déterminer quels blocs de signaux de synchronisation ou quelles informations système minimales restantes appartiennent au premier groupe ; et
des moyens pour changer (12) le motif périodiquement.

5. Appareil (10) selon la revendication 1, comprenant en outre :
des moyens pour utiliser (12) une pluralité de faisceaux pour les transmissions ;
des moyens pour associer (12) au moins un faisceau de la pluralité de faisceaux au premier groupe pour les transmissions de signal de commande court ; et
des moyens pour associer (12) les faisceaux restants de la pluralité de faisceaux à l'autre groupe à des fins autres que la procédure de transmission de signal de commande court.

6. Appareil (10) selon la revendication 5, comprenant en outre :
des moyens pour fournir (12, 18) un indice pour chacun de la pluralité de faisceaux, dans lequel un premier ensemble d'indices est fourni pour les faisceaux associés au premier groupe, et un deuxième ensemble d'indices est fourni pour l'autre groupe.

7. Appareil (10) selon la revendication 6, dans lequel le premier ensemble d'indices est fixe ou inclus dans des informations système ou est différent pour différents types de signaux de liaison descendante.

8. Appareil (10) selon l'une des revendications 5 à 7, comprenant en outre :
des moyens pour déterminer (12) un regroupement de faisceaux sur la base de taux d'occupation de canal mesurés sur différents faisceaux.

9. Appareil (10) selon l'une des revendications 1 à 3, comprenant en outre :
des moyens pour déterminer (12) un regroupement de faisceaux sur la base de types de signaux de liaison descendante.

10. Procédé réalisé par un équipement utilisateur, UE, le procédé comprenant les étapes suivantes :
obtenir par l'UE des informations précisant si un signal à recevoir d'un élément de réseau appartient à un premier groupe ou à un autre groupe sur la base d'une instance de temps de transmission du signal et d'un type du signal ;
déterminer une allocation de temps ou une allocation de ressources d'une période de temps pour un ou plusieurs signaux de commande courts ;
déterminer s'il faut recevoir le signal sous la forme d'un ou plusieurs signaux de commande courts sur la base du groupe auquel le signal appartient et de l'allocation ; et
recevoir le signal de l'élément de réseau, soit sous la forme d'un ou plusieurs signaux de commande courts sans détection de canal, soit sous la forme d'un signal soumis à une procédure d'écoute avant de parler.

11. Appareil (20) destiné à être utilisé sur un équipement utilisateur, UE, l'appareil comprenant :
des moyens pour obtenir (22) par l'UE des informations précisant si un signal à recevoir d'un élément de réseau appartient à un premier groupe ou à un autre groupe sur la base d'une instance de temps de transmission du signal et d'un type du signal ;
des moyens pour déterminer (22) une allocation de temps ou une allocation de ressources d'une période de temps pour un ou plusieurs signaux de commande courts ;
des moyens pour déterminer (22) s'il faut recevoir le signal sous la forme d'un ou plusieurs signaux de commande courts sur la base du groupe auquel le signal appartient et de l'allocation ; et
des moyens pour recevoir (28) le signal de l'élément de réseau, soit sous la forme d'un ou plusieurs signaux de commande courts sans détection de canal, soit sous la forme d'un signal soumis à une procédure d'écoute avant de parler.

12. Appareil (20) selon la revendication 11, comprenant en outre :
des moyens pour recevoir (28) une indication supplémentaire indiquant qu'au moins certaines des prochaines instances de signaux de liaison descendante dans l'autre groupe sont transmises sous la forme de signaux de commande courts.

13. Appareil (20) selon la revendication 11 ou 12, comprenant en outre :
des moyens pour effectuer (22) au moins l'une des opérations suivantes sur la base des informations précisant si une instance de transmission donnée de signaux ou de canaux de liaison descendante associés à un faisceau appartient au premier groupe ou au deuxième groupe :
synchronisation et acquisition de cellules ;
informations d'état de canal - validation de symboles de référence ;
informations d'état de canal et mesures de gestion de ressources radio ;
partage du temps d'occupation de canal de station de base, ou initiation d'une occupation de canal par l'appareil.

14. Appareil (20) selon l'une des revendications 11 à 13, comprenant en outre :
des moyens pour déterminer (22) quelles instances de signaux et de canaux de liaison descendante appartiennent au premier ou à l'autre groupe sur la base d'un ou plusieurs motifs.

15. Appareil (20) selon la revendication 14, comprenant en outre :
des moyens pour déterminer (22) qu'au moins un des un ou plusieurs motifs change dans le temps.
